## Europäisches Patentamt
## European Patent Office
## Office européen des brevets

(11) Publication number: **0 514 998 A1**

## EUROPEAN PATENT APPLICATION

(21) Application number: **92201459.2**

(22) Date of filing: **21.05.92**

(51) Int. Cl.5: **E04F 10/06, A01G 9/24**

(30) Priority: **23.05.91 NL 9100886**

(43) Date of publication of application:
**25.11.92 Bulletin 92/48**

(84) Designated Contracting States:
**BE DE ES FR GR IT NL**

(71) Applicant: **van Wingerde, Vincent Johan**
**Fats Wallerhof 17**
**NL-3069 PZ Rotterdam(NL)**

(72) Inventor: **van Wingerde, Vincent Johan**
**Fats Wallerhof 17**
**NL-3069 PZ Rotterdam(NL)**

(74) Representative: **Kooy, Leendert Willem**
**OCTROOIBUREAU VRIESENDORP & GAADE**
**P.O. Box 266**
**NL-2501 AW The Hague(NL)**

(54) **Building in particular a greenhouse.**

(57) A building has been described, particularly a greenhouse for cultivation and growth of plants, bushes, trees and similar crops, comprising a covering device (1) and a supporting construction (2) for the covering device.

According to the invention at least a portion of the covering device (1) from its closed position is at least partially collapsible over the entire surface of said portion and in reverse order.

The present invention relates to a building, comprising a covering device and a supporting construction for the covering device.

Such a building is used as a so-called greenhouse at a large scale in agriculture and horticulture. These greenhouses have a covering device as roof, which device consists of a frame of metal sections, usually of aluminum, wherein windows are mounted. A part of those windows can be opened, i.e. that they can be opened over a relatively small angle. However, in this manner it is substantially or completely impossible to provide natural conditions inside the greenhouse that is to say conditions like those in free nature. On the one hand this is a result of shadow caused by the covering device and of the loss of light owing to the often dirty windows, and on the other hand because there is not enough fresh air.

The invention aims at removing this objection of the known building.

This is attained in that according to the invention at least a portion of the covering device from its closed position is at least partially collapsible over the entire surface of said portion and in reverse order.

By applying those measures completely natural conditions can be effected in a simple manner in the building with a minimum of shadow and a maximum of fresh air. The result thereof is a higher and quicker yield and therewith a better yield per surface unit and more often harvesting in cultivation and growth of crops and fruit. In addition the space above the soil is completely free from obstacles so that there are no limitations for e.g. machines and installations for cultivating and/or renewing the soil in the building.

With a preferred embodiment of the building according to the invention the covering device consists at least partly of a flexible, windable material attached along one edge to a roller which is mounted in a fixed position on the support construction and drivable about its longitudinal axis, and said material being attached along the opposite edge to a rod section and the supporting construction and the rod section being connected to one another by a retractable rod system which is pivotably in a position parallel to the rotatable roller, the rod section cooperating with a sealing element when the covering device is closed.

By selecting suitable material, for instance material having thermal-insulating characteristics, whatever is inside the greenhouse can be optimally protected against ground-frost, snow, rain, wind and burning by fierce sunshine and also against attacks by insects and birds. Further the covering device according to the invention is considerably less expensive per surface unit than the known roof building of for instance horticultural greenhouses.

With a specifically effective embodiment of the building, comprising one of more sections, each section having a saddle or gabled roof and being provided with side and end walls, particularly for cultivation and growth of crops, according to the invention the covering device is carried out in duplicate, in which the rod sections can be moved towards and away from one another, and the one rod section having a projection which may engage into a recess in the other rod section.

With this embodiment of the building according to the invention both covering devices may entirely or partially be collapsed and unfolded, respectively, independent from one another, thereby enabling an optimal adjustment of light and fresh air, respectively, inside the building.

The invention will further be illustrated on the basis of the drawing with an example.

Figure 1 is a partial front view and a partial cross-section of a covering device and a supporting construction for it of an embodiment of the building according to the invention,

figure 2 shows a detail of a foundation and of an anchoring and adjusting device of one of the pillars of the supporting construction,

figure 3 shows a detail of the collapsed covering device and of one of the pillars of the supporting construction,

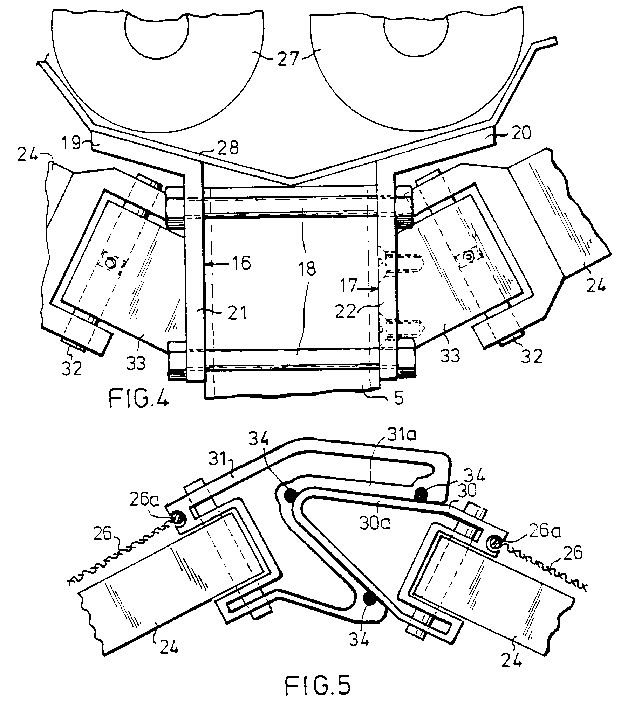

figure 4 shows the detail IV in figure 1 at a larger scale, and

figure 5 shows the detail V in figure 1 at a larger scale.

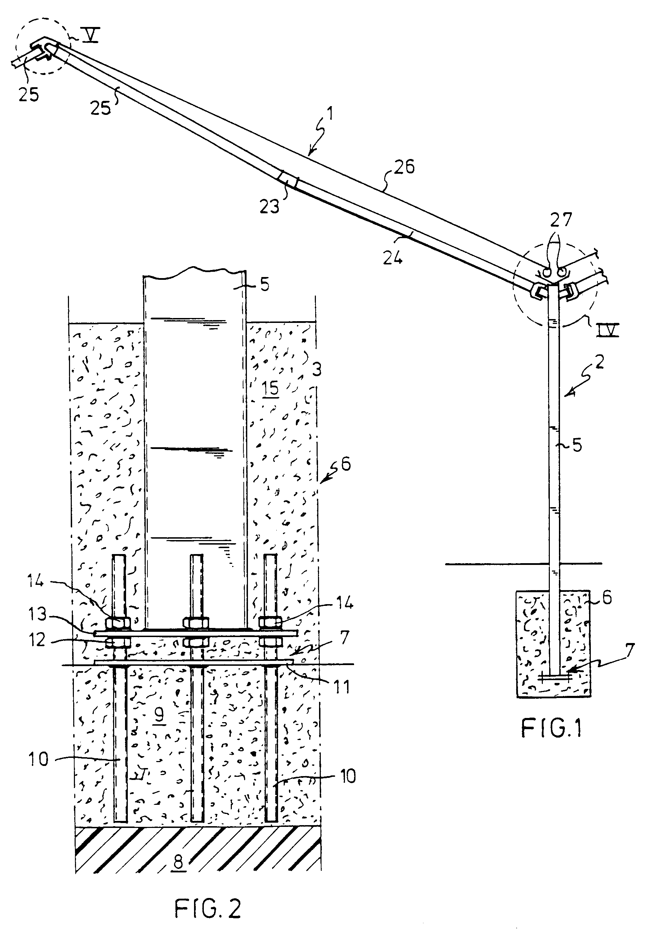

Figure 1 shows a part of the covering device 1 and of the supporting construction 2 of one embodiment of the building according to the invention, which has been constructed as a greenhouse to cultivate and grow crops and which is further provided with a plurality of parallel sections 3, side walls and end walls (not shown) and a saddle or gabled roof 4 above each section 3. Each saddle or gabled roof 4 consists of two covering devices 1.

The supporting construction 2 between two sections 3 consists of a row of aligned pillars 5 with a foundation 6 and an anchoring and adjusting device 7 which are drawn in detail in figure 2. The pillar 5 may for instance be a box girder.

On a solid base, e.g. a layer of rubble 8, a first layer of reinforced or non-reinforced concrete 9 is poured. The anchoring and adjusting device 7 which consists of a plurality of e.g. eight studs 10, which are welded parallelly to one another in an anchor plate 11, is placed with the studs 10 in the fresh concrete 9 so far until the anchor plate 11 rests on the upper surface of the layer 9, whereafter the layer of concrete 9 is set. In addition it is adapted in such a way that the studs 10 are as vertical as possible.

After setting the concrete 9 nuts 12 are screwed on the studs 10 and then the pillar 5 with the foot-plate 13 may be placed onto the studs 10 with the nuts 12. The foot-plate 13 is fixed with nuts 14. The pillar 5 may be positioned accurately vertically by means of the nuts 12 and 14 on each stud 10. After the pillar 5 is positioned vertically, a second layer of concrete 15 is poured, so that the pillar 5, after setting of the concrete, is positioned accurately vertically and fixedly anchored.

The covering device is supported on the pillars 5 by means of two angle pieces 16 and 17 which are mounted at the top of the pillar 5 by means of e.g. four through bolts 18. The upper flanges 19 and 20 of the angle pieces 16 and 17 enclose an angle of ± 110° with the vertical flanges 21 and 22 with which the angle pieces 16 and 17 are fixed on the pillar 5.

The embodiment of the covering device 1 according to the invention, which is shown in figure 1, substantially consists of two arms 24 and 25 connected to one another by a hinge 23, said arms may be brought from a substantially parallel position, wherein the covering device 1 is collapsed, into a substantially stretched position wherein the covering device 1 is unfolded, and which covering device 1 further consists of a so-called protection cloth 26. In this substantial stretched position the angle between the arms 24 and 25 is smaller than 180°, i.e. about 165°.

The protection cloth 26 is made of a flexible, windable material which may be adapted to the desirable conditions and to the climate in the greenhouse, respectively, and to the weather situation in the area in which greenhouse is built. The protection cloth 26 is for instance manufactured of textile (natural or synthetic fibres) which is at least at one side metallized with e.g. aluminum. This protection cloth is air permeable but isolates from moisture, heat, cold, sunshine, etc.

The protection cloth 26 is wound on a roller 27 which is supported at the ends by means of bearing blocks and intermediate bearing sockets (not shown) in a roof gutter 28 which is supported on the flanges 19 and 20 of the angle pieces 16 and 17 on the pillar 5. Because of the fact that the roller 27 with the protection cloth 26 is mounted above the roof gutter 28, and said protection cloth 26 inclines downwardly towards the roller 27, the rainwater may be guided by the protection cloth 26 into the roof gutter 28. The free edge 29 of the protection cloth 26 is attached to a cloth mounting section 30 and 31, respectively extending over the entire length or a part thereof, of each section 3 and to which the outer arms 25 of each covering device 1 is pivotally fixed by means of hinge pins 30b. The protection cloth 26 may be attached with so-called laces 26a for the protection cloth in a recess in the roller 27 and the mounting section 30 and 31, respectively.

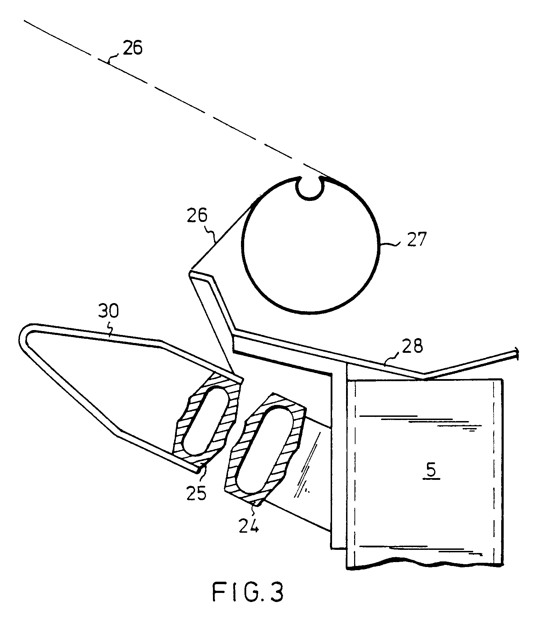

The hinge 23 between the arms 24 and 25 is provided with a tension spring (not shown) in such a way, that the arms 24 and 25 have the increasing tendency to move from the parallel position according to figure 3 into the substantially stretched position according to figure 1. The rod 24 is with its inner end pivotably mounted by means of a shaft 32 to a console 33 protruding upwardly at an angle of ± 25 à 30° with respect to the horizontal.

The retractable rod system of the covering device according to the invention may also consist of a telescopic rod system which can be pivoted parallelly to the roof gutter 28 when it is collapsed. In addition the outer rod may pivotably and adjustably be connected with the cloth mounting section 30, 31 by means of for instance a sliding block.

The rollers 27 are driven by an electric motor (not shown) through a gear wheel transmisstion and are e.g. centrally computer-controlled. The electric motor may drive in both directions.

The protection cloth mounting sections 30 and 31 are provided with parts 30a and 31a, respectively, which closely fit together, in which in part 31a one or more sealing members 34 may be mounted, e.g. cords or strips of rubber protruding from the inner surface of the part 31a in unloaded condition. As a result both covering devices 1 may be joined watertight and also fixed and locked, respectively, with respect to one another, so that the roof consisting of two covering devices 1 is windproof and is sheltered from both internal and external forces.

Further the parts 30a and 31a provide for the guide and centering of the rod sections 30 with respect to one another when these, by whatever source, would have been moved away from one another from their position fixed during building.

Figure 3 shows that the covering devices 1 can uncover the entire roof surface and figure 1 shows that they can also cover the entire roof surface.

By means of the electic motor(s) the protection cloth 26 may cover and uncover, respectively, each desirable section of the roof surface, the covering device remaining in the set position owing to the tendency of the arms 24 and 25 to stretch.

Although the building and the greenhouse, respectively, described above, are constructed with a double covering device 1, also an embodiment of a building or greenhouse provided with only one covering device 1 is conceivable. In addition, for instance the rod section 30 may, when the covering device 1 is closed, cooperate with another rod section (not shown) provided with a receiving portion, the shape of which corresponding with that of the receiving portion 31a of the rod section 31 and which may be mounted to a wall, a sidewall of the building and greenhouse, respectively, or to another solid, supporting construction.

Furthermore, in addition to the roof, also the side walls and end walls of the building according to the invention may be provided with the above-described single or double covering device 1, whereby it is also possible to construct the building without side or end walls, e.g. in the shape of a garden frame and therewith to replace the so-called windows entirely or partly by the above-described covering device.

Although the covering device according to the invention is described above on the basis of its application to a greenhouse, the covering device may also very well be applied to accommodations for sport and recreation, market stalls, bicycle sheds, carports and the like, and to put it briefly to buildings which must give protection against weather conditions.

## Claims

1. A building comprising a covering device and a supporting construction for the covering device, **characterized in that** at least a portion of the covering device (1) from its closed position is at least partially collapsible over the entire surface of said portion and in reverse order.

2. A building according to claim 1, **characterized in that** the covering device (1) at least partially consists of flexible, windable material, said material (26) being attached along one edge to a roller (27) drivable about its longitudinal axis and mounted in a fixed positon on the supporting construction (2), and along the opposite edge to a rod section (30, 31) and that said supporting construction (2) and the rod section (30, 31) are connected with one another by a retractable rod system (23, 24, 25) being pivotably in a position parallel to the rotatable roller (27), said rod section (30, 31) cooperating with a sealing element (30a, 31a, 34) when the covering device (1) is closed.

3. A building according to claim 2, **characterized in that** the retractable rod system (23, 24, 25) consists of two rods (24, 25) which are pivotable over an angle of about 180° with respect to one another and which are provided with a spring mechanism attempting to put the rods in the stretched position.

4. A building according to claim 2 or 3, **characterized in that** the flexible, windable material is a cloth (26) of textile which is metallized with aluminum on at least one side.

5. A building according to one of the preceding claims, consisting of one or more sections, each section having a saddle or gabled roof and being provided with side walls and end walls, particularly for cultivation and growth of crops, **characterized in that** said covering device (1) is carried out in duplicate, in which the rod sections (30, 31) are movable towards and away from one another, and in that one rod section (30) has a projection (30a) which may engage into a recess (31a) in the other rod section (31).

6. A building according to claim 5, **characterized in that** the walls of the building are at least partly provided with said covering device (1).

7. A building according to claim 5 or 6, **characterized in that** the projection (30a) and the recess (31a) of the rod sections (30, 31) closely fit together and that one or more sealing members (34) extending longitudinally of the rod sections are provided between the projection (30a) and the recess (31a).

8. A building according to one of the claims 5 up to and including 7, **characterized in that** the rotatable roller (27) is at least partly mounted above a roof gutter (28) fixed to supporting pillars (5) for the walls and the roof (4), and that the retractable rod system (23, 24, 25) is pivotably mounted to a supporting pillar (5) adjacent the roof gutter (28).

V

25

25

1

26

23

24

27

IV

2

5

5

3

15

6

6

14

13

12

14

7

11

9

10

10

10

8

FIG.1

FIG. 2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 208 302 (THAN) <br> * abstract * <br> --- | 1,2,3 | E04F10/06 <br> A01G9/24 |
| X | US-A-4 313 279 (GREENBAUM) <br> * abstract * <br> --- | 1,2,3 | |
| X <br> A | DE-A-3 418 584 (BRONNHUBER) <br> * abstract * <br> ----- | 1,2,3 <br> 6 | |

TECHNICAL FIELDS SEARCHED (Int. Cl.5 )

E04F
A01G

The present search report has been drawn up for all claims

| Place of search | Date of completion of the search | Examiner |
|---|---|---|
| THE HAGUE | 27 AUGUST 1992 | VAN GESTEL H.M. |